# EUROPEAN PATENT APPLICATION

(11) **EP 4 417 966 A1**
(43) Date of publication of application: **21.08.2024**
(21) Application number: 23156911.2
(22) Date of filing: 15.02.2023
(51) Int. Cl.: G01N 21/552, G01N 21/64

(54) **SENSOR DEVICE**

(71) Applicant: Technische Universität München, 80333 München (DE)
(72) Inventor: SIMMEL, Friedrich, 80336 München (DE); ROTHFISCHER, Florian, 81739 München (DE); KOPPERGER, Enzo, 80807 München (DE); LIST, Jonathan, 81925 München (DE); LANGECKER, Martin, 81737 München (DE)
(74) Representative: Hoefer & Partner Patentanwälte mbB

(57) **Abstract**

The invention concerns a sensor device (1) for detecting the presence of one or more molecules (20) and/or of a class of molecules (20); comprising at least one first (nano-) structure (2); at least one second structure (3); at least one joining portion (4) respectively connecting the at least one first (nano-)structure (2) and the at least one second structure (3) and configured to allow a relative mobility between the at least one first (nano-)structure (2) and the at least one second structure (3), wherein the at least one joining portion (4) is an element separate from and connected to the at least one first (nano-)structure (2) and the at least one second structure (3) or wherein the at least one joining portion (4) is formed integrally with the at least one first (nano-)structure (2) and/or with the at least one second structure (3); one binding structure (5), especially one binding structure (5) per joining portion (4), configured to bind with a molecule, the presence of which is to be detected, wherein the binding structure (5) is located on the at least one first (nano-)structure (2) or on the at least one second structure (3) or on the at least one joining portion (4) such that said allowed relative mobility between the at least one first (nano-)structure (2) and the at least one second structure (3) is changed, especially limited, in a bound state of the binding structure (5) as compared to an unbound state of the binding structure (5); and a detecting means (100) for detecting said relative mobility between the at least one first (nano-)structure (2) and the at least one second structure (3).

## Description

The invention concerns a sensor device for detecting the presence of one or more molecules and/or for detecting the presence of a class of molecules.

Conventionally, nanosensor systems for the detection of biomolecules such as cytokines are known from for example US 2022/0183562 A1. Such nanosensors as shown therein are commonly based on a tweezer principle, in which a binding of molecules causes a closing of a hinge of the tweezers, which in turn increases a photoacoustic signal provided by such tweezers. The photoacoustic signal is detected by detecting means. Furthermore, similar sandwich configurations of such nanosensors are known from for example US 2022/0195421 A1. In both cases, two arms of the tweezers or sandwich each include at least one binding molecule or receptor. When the molecule to be detected (for instance in the case of US 2022/0183562 A1: cytokines) binds to the receptors on both arms, the signal provided by the nanosensor is changed such that the presence of the molecule can be detected.

These common solutions have the following disadvantages. Firstly, the detection of the molecule is only possible if the molecule binds to the binding molecules or receptors on both arms. Therefore, the sensitivity of such a sensor is rather low. Secondly, the molecule to be detected needs to be suitably large and needs to comprise at least two sections, especially two epitopes, which can bind to the multiple receptors. Therefore, the sensor is not suitable for the detection of smaller molecules or of molecules comprising only one binding section or epitope.

It is an object of the present invention to overcome the foregoing described disadvantages of the prior art. In particular, it is an object of the present invention to provide a sensor device with a high sensitivity and which is capable of detecting a larger variety of molecules, especially smaller molecules.

The solution of this object is achieved by the features of the independent claim. The dependent claims contain advantageous embodiments of the present invention.

In particular, this object is solved by a sensor device for detecting the presence of one or more molecules and/or of a class of molecules comprising at least one first (nano-)structure, at least one second structure, at least one joining portion, one binding structure, especially one binding structure per joining portion, and a detecting means. Therein, the at least one joining portion respectively connects the at least one first (nano-)structure and the at least one second structure. The at least one joining portion is respectively configured to allow a relative mobility between the at least one first (nano-)structure and the at least one second structure. The at least one joining portion is an element separate from and connected to the at least one first (nano-)structure and the at least one second structure or is formed integrally with the at least one first (nano-)structure and/or with the at least one second structure. Furthermore, the one binding structure, especially the one binding structure per joining portion, is configured to bind with a molecule, the presence of which is to be detected. The binding structure is located on the at least one first (nano-)structure or on the at least one second structure or on the at least one joining portion such that said allowed relative mobility between the at least one first (nano-)structure and the at least one second structure is changed, especially limited, in a bound state of the binding structure as compared to an unbound state of the binding structure. Furthermore, the detecting means is configured to detect said relative mobility between the at least one first (nano-)structure and the at least one second structure.

Thereby, especially since exactly one binding structure is provided per joining portion, the relative mobility is changed once the molecule to be detected binds to said exactly one binding structure. This change in relative mobility is detected by the detecting means. Therefore, the sensitivity of detection is high and smaller molecules can be detected by the sensor device according to the present invention.

Herein, "relative mobility" refers to a destruction-free mobility. A "restriction of mobility" is to be understood as within the bounds of destruction-free movement.

Preferably, the detecting means is configured to detect the relative mobility between the at least one first (nano-)structure and the at least one second structure before and after binding of the molecule(s) to be detected. Preferably, the detecting means is configured to detect a change in the relative mobility between before and after binding of the molecule(s) to be detected. Preferably, the detecting means is configured to detect a time-dependent signal, wherein a value, especially an intensity, of the signal is dependent on a relative mobility and thereby dependent on the binding state of the molecule(s) to be detected. Therefore, by detecting a (especially time-dependent) relative mobility between the respective first (nano-)structure and the second structure, the detecting means is configured to detect the presence of the molecule(s) to be detected.

Preferably, each joining portion connects exactly one pair of the at least one first (nano-) structure and the at least one second structure. For instance, in the case of one first (nano-)structure and one second structure, one joining portion is provided connecting the two structures. In the case of equally multiple (for instance, five) first (nano-)structures and multiple (correspondingly also five) second structures, an equal multiple (correspondingly also five) of joining portions is provided connecting each first (nano-)structure to one second structure. Further for instance, in case exactly one second structure and multiple first (nano-) structures (or vice versa) are provided, the number of joining portions corresponds to the number of the multiple first (nano-)structures (or vice versa).

Advantageously, the at least one first (nano-)structure is a nanostructure.

Preferably, the at least one second structure is a nanostructure.

Preferably, the at least one joining portion is a nanostructure.

Herein, unless certain dimensions are further specified, the term "nanosized" or "nanostructure" refers to the respectively referred to element or object having a size in at least one of its dimensions (length, width, height) of at least one or a few to a few tens of nanometers (for example 10 nm to 50 nm), especially less than 1000 nm (less than 1 µm). Preferably, not all dimensions of said element or object are necessarily "nanosized". For example, a length of one element or object may be equal to or higher than 1000 nm, this element or object nonetheless being referred to as "nanosized" or "nanostructure" due to preferably a width or height thereof being only a few to a few tens or a few hundreds of nanometers. Most preferably, no more than one dimension (length, width, height) of the respective object or element as a nanostructure is equal to or higher than 1000 nm. In other words, preferably, at least two of its dimensions (length, width, height) are of at least one or a few to a few tens of nanometers (for example 10 nm to 50 nm), especially less than 1000 nm (less than 1 µm).

Preferably, the nanostructured element or object, especially the at least one first (nano-) structure, is formed at least partially or entirely of a DNA origami structure.

In one advantageous embodiment, the at least one first (nano-)structure is a rod-like structure. In addition or alternatively, the at least one second structure is preferably a plate-shaped structure.

Herein, the term "rod-like structure" preferably refers to an object with a length significantly greater than its width and/or height. For example, a length of such rod-like structure as a nanostructure may be few tens to few hundreds nm, for example roughly 300 nm to 500 nm, particularly roughly 400 nm, whereas a width and height thereof may respectively be a few nm, for example 5 nm to 10 nm, thereby preferably constituting a rod shape.

Further herein, the term "plate-shaped structure" preferably refers to an object with a length and width significantly greater than its height. Herein, preferably, length and width thereof are not necessarily equal. For example, a length and width of such plate-shaped structure as a nanostructure may be few tens to few hundreds nm, for example 30 nm to 60 nm, whereas a height thereof may be a few nm, for example 2 nm to 10 nm.

Preferably, the plate-shaped structure refers to a flat plate-shaped structure, with at least one, especially all, surface(s) thereof being substantially flat.

In some embodiments, the at least one first (nano-)structure and the at least one second structure are both rod-like structures. Preferably, the at least one first rod-like (nano-) structure and the at least one second rod-like structure are connected via one joining portion.

In some embodiments, the at least one first (nano-)structure and the at least one second structure are both plate-shaped structures. Preferably, the at least one first plate-shaped (nano-)structure and the at least one second plate-shaped structure are connected via one joining portion.

Preferably, at least one first (nano-)structure is a rod-like structure and at least one second structure is a plate-shaped structure or vice versa. Preferably therein, at least two, especially many, rod-like first (nano-)structures are connected to one plate-shaped second structure, preferably each via one joining portion.

In a further advantageous embodiment, the sensor device preferably comprises exactly one second structure. Preferably therein, the exactly one second structure is a macrostructure, wherein "macrostructure" describes at least one dimension (length, width, height) being preferably larger than aforementioned nanostructure or nanosized dimension. For example, in a macrostructure, preferably at least two dimensions may be 1 µm or more, preferably 10 µm or more, more preferably 100 µm or more. Therein, for example, the exactly one second structure is preferably a macrosized plate-shaped structure. For example, the exactly one second structure is preferably a plate with a length and a width of a few hundred µm to a few mm, respectively. At least two, especially many, first (nano-)structures may be attached via respective joining portions to such a macrosized plate-shaped structure as the exactly one second structure.

Preferably, the at least one joining portion is configured to allow a relative rotation as said relative mobility of the at least one first (nano-)structure relative to the at least one second structure.

In one advantageous embodiment, a first axis of rotation is parallel to a plane defined by an extension of a surface of the at least one second structure with which the at least one joining portion is formed integrally or to which the at least one joining portion is connected. Therein, the binding structure is configured to - in the bound state - limit said allowed relative rotation around the first axis of rotation to a predefined elevation angle.

Preferably therein, the at least one joining portion allows the first (nano-)structure to rotate to a predetermined elevation angle - in the unbound state - of 0° to 180°, preferably of 20° to 160°, more preferably of 45° to 135° and most preferably of between 0° and 90° or of between 0° and 45°. Preferably, in the bound state, the allowed relative rotation around the first axis of rotation is limited to a relative rotation of roughly half of the allowed relative rotation in the unbound state. Preferably, the relative rotation in the bound state of the binding structure is limited by between more than 0° and equal to or less than 90°, more preferably by between more than 0° and equal to or less than 45°, most preferably by between more than 0° and equal to or less than 30°. Herein, "limited by between X° and Y°" preferably means limiting, in the bound state, the rotatable range of the unbound state by a value between minimum X° and maximum Y° of limitation of the rotatable range (a change or delta of allowable rotation angles). For example, in the preferable case of the joining portion allowing a rotation of 0° to 180° in the unbound state, if limited by between more than 0° and equal to or less than 90° in the bound state, the relative rotation may be limited by a value up to 90°. In the case of limitation by 90°, a rotation in the bound state is allowed between relative positions 0° and 90° or between 90° and 180° or between relative positions 20° and 110°, for example (180° - 90° = 90°). Further therein, for example, limitation thereof by 70° (being within the range of more than 0° and less than 90°) can allow a relative rotation by between 0° and 110° (180° - 70° = 110°), etc.

Preferably, a second axis of rotation is perpendicular to a plane defined by an extension of a surface of the at least one second structure with which the at least one joining portion is formed integrally or to which the at least one joining portion is connected. The binding structure is configured to - in the bound state - limit said allowed relative rotation around the second axis of rotation to a predefined pivot angle.

Preferably, the second axis of rotation is perpendicular to the first axis of rotation.

Preferably, the joining portion is configured to allow a relative rotation of the at least one first (nano-)structure relative to the second structure around both the first axis of rotation and the second axis of rotation.

Advantageously, the joining portion is configured to allow a relative rotation of the at least one first (nano-)structure relative to the second structure only around the first axis of rotation or only around the second axis of rotation.

In one advantageous embodiment, the at least one joining portion is a hinge joint. Preferably, such hinge joint is configured to restrict a rotation to one axis of rotation, especially to the first axis of rotation. Thereby, the relative mobility is restricted to one axis of rotation, which simplifies the detection thereof.

Preferably, the binding structure is located on an end section, especially on an end face, of the at least one first (nano-)structure adjacent to the at least one joining portion. Thereby, the molecule to be detected is preferably bound to the respective first (nano-)structure such that a relative mobility of the first (nano-)structure is restricted by said bound molecule. Therein, the bound molecule is preferably disposed between the end section, especially the end face, of the first (nano-)structure and the respective second structure, such that the relative mobility of the first (nano-)structure is limited.

Alternatively, the binding structure is located on a surface of the at least one second structure. Therein, the binding structure is located on the surface of the at least one second structure so as to hinder a relative rotation of the at least one first (nano-)structure, especially around the second axis of rotation. Advantageously, the binding structure is located on the surface of the at least one second structure adjacent to the at least one joining portion. Thereby, the molecule to be detected is preferably bound to the respective second structure such that a relative mobility of the first (nano-)structure is restricted by said bound molecule. In both aforementioned cases of the binding structure being located preferably on an end section of the at least one first (nano-)structure or on a surface of the at least one second structure, the bound molecule is wedged between the at least one first (nano-)structure and the at least one second structure near the joining portion, such that said relative mobility between the at least first (nano-)structure and the at least one second structure is limited by the bound molecule.

Advantageously, the binding structure is located on or at an interface of at least two out of the at least one first (nano-)structure, the at least one second structure, and the at least one joining portion. For example, the binding structure may be located on or at an interface between the at least one first (nano-)structure and the at least one joining portion. Alternatively, in a preferable embodiment, the binding structure is located only on the at least one first (nano-)structure or only on the at least one second structure or only on the at least one joining portion.

In one advantageous embodiment, at least two of the at least one first structure, the at least one second structure, and the at least one joining portion are formed integrally with one another, especially as a continuous (nano-)structure. For example, one first (nano-)structure and one second structure are preferably formed as a single continuous (nano-)structure. Further for example, one first structure and one joining portion are preferably formed as a single continuous (nano-)structure. Further for example, one joining portion and one second structure are formed as a single continuous (nano-)structure. The aforementioned continuous (nano-)structure is further connected to the other remaining structure or joining portion, which is not a part of the continuous (nano-)structure. The continuous nano-structure may preferably be combined with or attached to further macro-structures. For example, one first (nano-)structure and one joining portion may be formed as a single continuous (nano-) structure and may be further attached to a macrosized second structure such as a macrosized plate.

Preferably, all of the at least one first (nano-)structure, the at least one second structure, and the at least one joining portion are formed integrally, especially as a continuous (nano-) structure.

Advantageously, the binding structure is configured to bind with a predetermined organic molecule, especially with a predetermined bio-molecule. For example, the binding structure is preferably configured to bind with DNA and/or RNA and/or ssDNA (single-stranded DNA) and/or ssRNA (single-stranded RNA) and/or proteins and/or small molecules and/or antibodies.

In one advantageous embodiment, each binding structure is configured to bind with exactly one molecule. In a further advantageous embodiment, at least one or each binding structure is configured to bind with more than one molecule. For example, at least one or each binding structure may comprise multiple receptors, each for one molecule, especially for exactly one molecule. Preferably therein, multiple receptors (for instance two) of one such binding structure are not configured to bind to a single molecule in common. Therein, preferably, such binding structure(s) is/are configured to limit the relative mobility (in a bound state), especially in dependence on the number of bound binding structures.

Preferably, the binding structure comprises or consists of ssDNA and/or aptamers and/or nanobodies and/or antibodies and/or proteins and/or small molecules. One example of nanobodies is a fragment of an antibody. Another example is a single-domain antibody, especially a camelid nanobody from for example a llama or the like.

Preferably, the binding structure comprises or consists of ssDNA, wherein the molecule to be detected is ssDNA and/or ssRNA.

Preferably, the binding structure comprises or consists of aptamers, wherein the molecule to be detected is preferably one or more proteins. More preferably therein, the molecule to be detected is a small molecule.

Further preferably, the binding structure comprises or consists of one or more nanobodies, wherein the molecule to be detected is most preferably one or more proteins. Alternatively or in addition thereto, the molecule to be detected is one or more antibodies.

Further preferably, the binding structure comprises or consists of one or more antibodies, wherein the molecule to be detected is most preferably one or more proteins.

Further preferably, the binding structure comprises or consists of one or more proteins, wherein the molecule to be detected is most preferably one or more antibodies.

Further preferably, the binding structure comprises or consists of one or more small molecules, wherein the molecule to be detected is most preferably one or more antibodies.

In one advantageous embodiment, at least one of the at least one first (nano-)structure, the at least one second structure, and the at least one joining portion comprises or consists of a nucleic acid structure and/or a protein. DNA and RNA are preferable examples of such nucleic acid structures.

Preferably, at least two of the at least one first (nano-)structure, the at least one second structure, and the at least one joining portion comprise or consist of DNA or RNA. Preferably therein, the number of strands (single stranded or double stranded) varies between them. For example, the at least one first (nano-)structure may comprise double stranded DNA, the joining portion may comprise single stranded DNA, and the second structure may comprise double stranded DNA.

In one advantageous embodiment, the at least one first (nano-)structure and/or the at least one second structure comprise(s) a marker, especially a fluorescence marker. Preferably, the detecting means is a microscope, in particular preferably a fluorescence microscope. The detecting means is preferably configured to detect a movement of said marker. Preferably, the detecting means is configured to detect a (continuous) time-dependent movement of said marker (i.e. a movement over time or time-resolved), which indicates the relative mobility. By detecting a time-dependent movement of the marker, the detecting means is preferably configured to thereby detect the relative mobility of the at least one first (nano-)structure relative to the at least one second structure depending on a binding state of the molecule(s) to be detected. Preferably therein, the detecting means is configured to detect only a time-dependent movement of said marker(s), especially without detecting or computing absolute intensities or their changes.

Preferably, in a case in which the at least second structure is plate-shaped, and the at least one first (nano-)structure is rod-like, the joining portion being disposed at one end of the rod-like first (nano-)structure and attaching said first (nano-)structure to a surface of the second structure, the one or more markers, especially fluorescence marker(s), is/are disposed at a distal end of the first (nano-)structure opposite the end to which the joining portion is attached.

Preferably, the at least one first (nano-)structure and the at least one second structure each comprise at least one fluorophore. Therein, the detecting means is configured to detect a Förster Resonance Energy Transfer (FRET) between said fluorophores comprised by the at least one first (nano-)structure and the at least one second structure. Preferably, the amount of FRET, i.e. the amount of energy transferred between the fluorophores, is dependent on the relative mobility between the respective first (nano-)structure and second structure. For example, with higher mobility, i.e. in an unbound state of the molecule(s) to be detected, FRET may be lower than with lower mobility, i.e. in a bound state of the molecule(s) to be detected. Especially by detecting a time-dependent FRET, especially a time-dependent FRET intensity signal, the detecting means is thereby configured to detect the relative mobility between the respective first (nano-)structure and the second structure and to thereby detect the presence of the molecule(s) to be detected.

Further preferably, the detecting means is configured to detect a surface plasmon resonance (SPR) between the at least one first (nano-)structure and the at least one second structure. Preferably, the SPR signal is time-dependent, wherein the signal, especially its intensity, changes depending on the relative mobility of the respective first (nano-)structure and the second structure. For instance, the SPR signal intensity increases with lower relative mobility, such that the SPR signal increases in intensity under presence of the molecule(s) to be detected.

Preferably, at least one of the at least one first (nano-)structure and the at least one second structure comprise(s) a nanoparticle, preferably a gold nanoparticle. Preferably, the nanoparticle is disposed at a distal end of the respective first (nano-)structure, especially opposite the joining portion. Thereby, sensitivity to SPR is advantageously increased.

Further details, advantages, and features of the preferred embodiments of the present invention are described in detail with reference to the figures. Therein:
Fig. 1 shows a schematic drawing of a sensor device according to a first embodiment of the present invention;
Fig. 2 shows a schematic drawing of the sensor device according to the first embodiment of the present invention;
Fig. 3 shows an illustrative example of a measurement result obtained by the sensor device shown in Fig. 1;
Fig. 4 shows an illustrative example of a measurement result obtained by the sensor device shown in Fig. 2;
Fig. 5 shows a schematic drawing of a sensor device according to a second embodiment of the present invention;
Fig. 6 shows a schematic drawing of the sensor device according to the second embodiment of the present invention;
Fig. 7 shows a schematic drawing of a sensor device according to a third embodiment of the present invention;
Fig. 8 shows a schematic drawing of the sensor device according to the third embodiment of the present invention;
Fig. 9 shows a schematic drawing of the sensor device according to the third embodiment of the present invention;
Fig. 10 shows an illustrative example of a measurement result obtained by the sensor device shown in Fig. 8;
Fig. 11 shows an illustrative example of a measurement result obtained by the sensor device shown in Fig. 9;
Fig. 12 shows a schematic drawing of a sensor device according to a fourth embodiment of the present invention;
Fig. 13 shows a schematic drawing of the sensor device according to the fourth embodiment of the present invention;
Fig. 14 shows an illustrative example of a measurement result obtained by the sensor device shown in Figs. 12 and 13;
Fig. 15 shows a schematic drawing of a sensor device according to a fifth embodiment of the present invention;
Fig. 16 shows a schematic drawing of the sensor device according to the fifth embodiment of the present invention;
Fig. 17 shows an illustrative example of a measurement result obtained by the sensor device shown in Figs. 15 and 16; and
Fig. 18 shows a schematic drawing of a sensor device according to a sixth embodiment of the present invention.

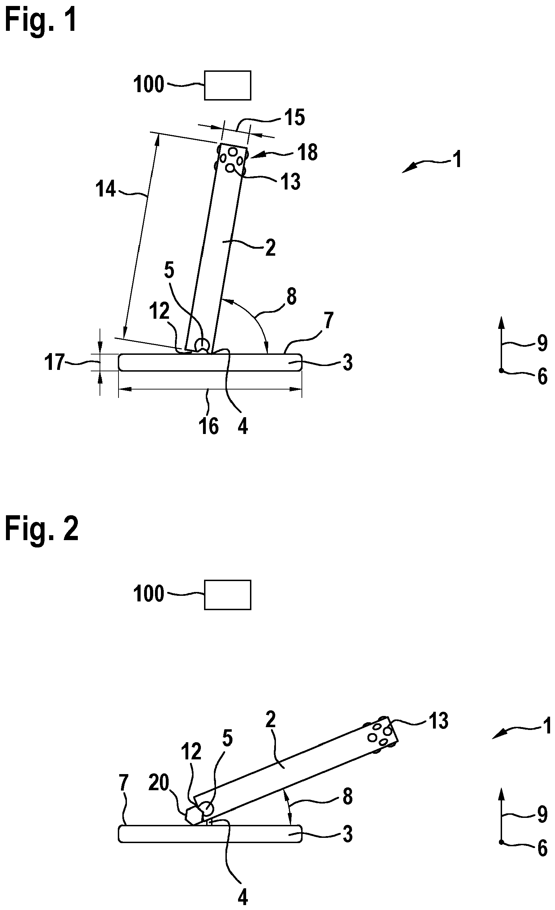

Figs. 1 and 2 each show a schematic drawing of a sensor device 1 according to a first embodiment of the present invention.

In particular, as will be explained in more detail below, Fig. 1 shows the sensor device 1 when no molecule 20, the presence of which is to be detected by the sensor device 1, is present.

Fig. 2 shows the sensor device 1 when said molecule 20 is present in or near the sensor device 1.

As stated, the sensor device 1 is configured to detect the presence of one or more molecules 20 and/or a class of molecules 20.

The sensor device 1 of the present embodiment comprises one first structure 2 and one second structure 3. Herein, the first structure 2 is a rod-like structure. The second structure 3 is a plate-shaped structure.

In particular, in the present embodiment, the first structure 2 and the second structure 3 are each nanosized. In the present embodiment, the first structure 2 and the second structure 3 are each entirely nanosized. In other words, all of their respective dimensions (length, width, height) are less than 1000 nm. For example, a length 14 of the first structure 2 is 100 nm to 500 nm, especially roughly 400 nm, preferably 436 nm. For example, a width 15 of the first structure 2 is 3 nm to 10 nm, preferably roughly 7 nm. For example a height (in depth direction of Fig. 1) of the first structure 2 is preferably 3 nm to 10 nm, preferably roughly 7 nm. Preferably, the width 15 and the height of the first structure 2 are equal. For example, a length 16 of the second structure 3 is 40 nm to 100 nm, preferably roughly 55 nm. For example, a width (in depth direction of Fig. 1) of the second structure 3 is 40 nm to 100 nm, preferably roughly 55 nm. Preferably, length 16 and width of the second structure 3 are equal. For example, a height 17 of the second structure 3 is 3 nm to 10 nm, preferably roughly 7 nm. Preferably, a height 17 of the second structure 3 is equal to the width 15 and/or a height of the first structure 2.

The sensor device 1 further comprises a joining portion 4. The joining portion 4 connects the first structure 2 to the second structure 3. In the present embodiment, the joining portion 4 is an element separate from the first structure 2 and the second structure 3. In other words, the joining portion 4 of the present embodiment is not formed integrally with the first structure 2 or with the second structure 3.

The joining portion 4 is configured to serve as a joint connecting the first structure 2 and the second structure 3. The joining portion 4 is configured to allow a relative mobility between the first structure 2 and the second structure 3.

In the present embodiment, the relative mobility is an allowed rotation of the first structure 2 relative to the second structure 3 (or vice versa). Herein, one first axis of rotation 6 is parallel to a plane defined by an extension of a surface 7 of the second structure 3. As can be taken from Figs. 1 and 2, the axis of rotation 6 extends in a depth direction, especially perpendicular to a substantial extension of the first structure 2.

Furthermore, an elevation angle 8 is defined between the first structure 2 and the second structure 3. In particular, the elevation angle 8 is defined between the surface 7 of the second structure 3 and the first structure 2.

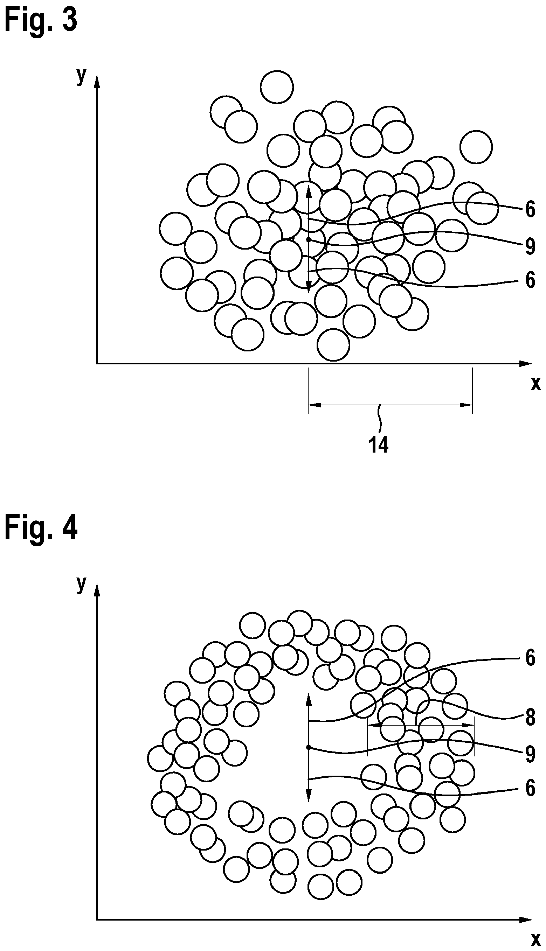

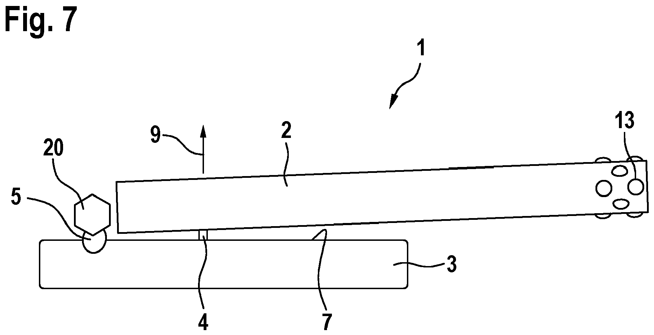

In the present embodiment, as will be explained with respect to Figs. 3 and 4, the relative mobility of the first structure 2 relative to the second structure 3 is not limited to the aforementioned first axis of rotation 6, i.e. to the elevation angle 8. Herein, the first structure 2 (or the second structure 3) is also allowed to rotate around a second axis of rotation 9 around a pivot angle 10 (not shown). This pivot angle 10 will be described in more detail in view of Figs. 7 to 11. The second axis of rotation 9 is perpendicular to the plane defined by the extension of the surface 7 of the second structure 3.

The sensor device 1 further comprises a binding structure 5. The binding structure 5 is configured to bind with the molecule 20, th e presence of which is to be detected. For example, the binding structure 5 is single stranded DNA or RNA (ssDNA, ssRNA), which is configured to bind to further ssDNA or ssRNA.

The binding structure 5 is located on an end section, particularly on an end face 12 of the first structure 2.

When a molecule 20 binds with/to the binding structure 5, the relative mobility between the first structure 2 and the second structure 3 is changed, especially limited. In the present embodiment, as a comparison of Fig. 1 with Fig. 2 shows, the elevation angle 8 is limited once the molecule 20 binds with or to the binding structure 5. Preferably, the molecule 20 binds with/to the binding structure 5 and mechanically blocks the relative rotation of the first structure 2 to the second structure 3 (or vice versa) around the first axis of rotation 6.

Thereby, the presence of molecule(s) 20 has the effect of changing or limiting the relative mobility between the first structure 2 and the second structure 3.

The sensor device 1 further comprises a detecting means 100 which is configured to detect the relative mobility between the first structure 2 and the second structure 3.

In the present embodiment, the first structure 2 comprises at least one, especially a plurality of, markers 13. Herein, the markers 13 are fluorescence markers. The markers 13 are disposed near a distal end 18 of the first structure 2 opposite the end face 12. In particular, the markers 13 are disposed within a distal end portion extending roughly 10 % of the overall length 14 of the first structure 2 (i.e. arranged within distal 10 % of the first structure 2).

The detecting means 100 is especially a fluorescence microscope configured to detect a fluorescence signal emitted by the markers 13. Furthermore, the detecting means 100 is configured to detect said signal over a predetermined period of time. Thereby, the detecting means 100 is configured to detect positions of the markers 13 over time. When the relative mobility of the first structure 2, which comprises the markers 13, is changed or limited by the binding of the molecule 20 with/to the binding structure 5, the detecting means 100 detects a changed signal.

Examples of such signals are shown in Figs. 3 and 4. Therein, Fig. 3 shows an illustrative example of a measurement result obtained by the sensor device 1 shown in Fig. 1, whereas Fig. 4 shows an illustrative example of a measurement result obtained by the sensor device 1 shown in Fig. 2. In other words, Fig. 3 shows a measurement result before (or without) binding of the molecule 20 with/to the binding structure 5, and Fig. 4 shows a measurement result after (or with) binding of the molecule 20 with/to the binding structure 5.

Therein, in each of Figs. 3 and 4, the fluorescence signals emitted by the markers 13 are shown, wherein multiple measurement points are recorded over time and shown with respect to space dimensions X and Y. Herein, the space dimensions X and Y coincide with the length 16 and the width of the second structure 3. In other words, as shown in Figs. 1 and 2, the detecting means 100 views a top view onto the first structure 2 and the second structure 3.

As can be taken from Fig. 3, when no molecule 20 is present or bound with/to the binding structure 5, the first structure 2 can freely rotate around the first axis of rotation 6 and the second axis of rotation 9. Thereby, the measurement points theoretically (given sufficient time and measurements) span all points within a circle having a radius roughly equal to the length 14 of the first structure 2.

Once the molecule 20 binds with/to the binding structure 5, as shown in Fig. 2, the relative rotation of the first structure 2 around the first axis of rotation 6 is limited to a predetermined range of elevation angles 8. Thereby, the measurement points describe a ring, due to further rotation around the second axis of rotation 9 being possible.

Thus, by measuring the signal emitted by the markers 13 overtime, the detecting means 100 is capable of detecting the relative mobility between the first structure 2 and the second structure 3 over time and is therefore capable of detecting a presence of the molecule(s) 20.

Preferably, the first structure 2, the second structure 3 and the joining portion 4 are each formed of a DNA origami structure.

In the following, for ease of explanation, the first structure 2, the second structure 3 and the joining portion 4 may in summary be denoted as "sensor mechanism 2, 3, 4". Therefore, the foregoing described sensor device 1 may also be described as comprising a sensor mechanism 2, 3, 4 and a detecting means 100.

Although the foregoing described embodiment comprises one first nanostructure 2, one second nanostructure 3 and one joining portion 4, it should be noted that multiples of at least one or more, especially all, of the foregoing elements 2, 3, 4 can be provided in one sensor device 1.

For example, the sensor device 1 may comprise multiple sensor mechanisms 2, 3, 4 and one or more detecting means 100. In one example, the sensor device 1 comprises many (i.e. in the order of hundreds) sensor mechanisms 2, 3, 4 which can for example be disposed within a solution in which the presence of the molecules 20 is to be detected. In such an example, the detecting means 100 is configured to detect the relative mobility between the first structure 2 and the second structure 3 of the sensing mechanisms 2, 3, 4 by for example detecting how the sensing mechanisms 2, 3, 4 disperse in the solution. For example, a dispersion capability, detected by measuring for example a dispersion coefficient, of the sensing mechanisms 2, 3, 4 can be higher when the molecules 20 are present, since the sensing mechanisms 2, 3, 4 can for example have (on average) a higher drag when the relative mobility thereof is not limited. In such an example, the second structure 3 may be a rod-like structure.

In another example, one or more of the foregoing elements 2, 3, 4 can be macrosized, i.e. be a macrostructure. In one example, the second structure 3 is a plate-shaped macrostructure. Therein, the second structure 3 can comprise a length and/or width of at least 1 µm, preferably of multiple millimeters. On said second macrostructure 3, a plurality (i.e. 2 to 10), especially many (i.e. in the order of hundreds) of first structures 2 as nanostructures can be disposed and connected thereto, each by one joining portion 4. Therein, one detecting means 100 may be provided capable of detecting the relative mobility of any one or more, especially of all, such first structures 2. Alternatively, a plurality of detecting means 100 may be provided.

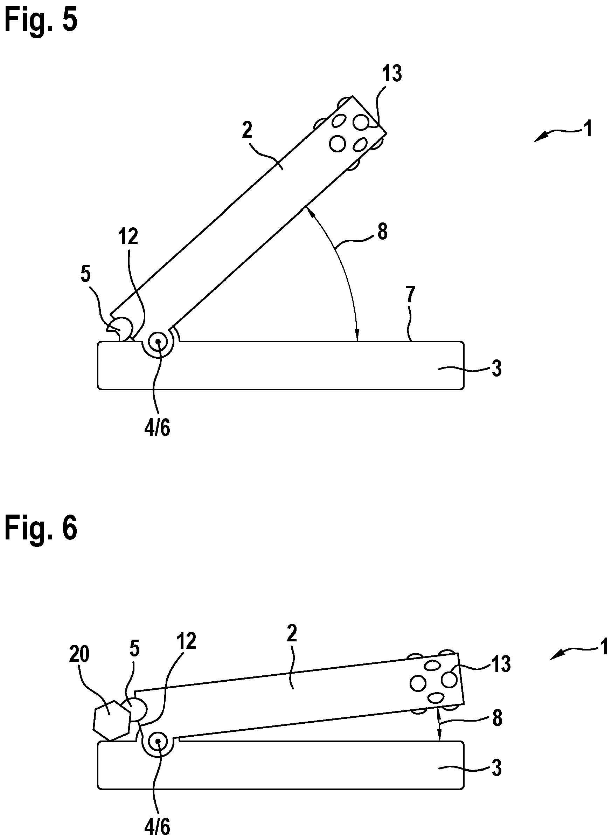

Figs. 5 and 6 each show a schematic drawing of a sensor device 1 according to a second embodiment of the present invention. For ease of explanation, the detecting means 100 is not shown therein. Fig. 5 shows a state in which no molecule 20 is present or bound to the binding structure 5, whereas Fig. 6 shows a state in which a molecule 20 is bound to the binding structure 5.

The sensor device 1 of the present embodiment includes the first structure 2, the second structure 3 and a hinge joint 4 as the joining portion 4.

Therein, the hinge joint 4 is configured to allow a relative rotation of the first structure 2 to the second structure 3 (or vice versa) only around the first axis of rotation 6. Herein, the first axis of rotation 6 coincides with the location of the hinge joint 4.

Similar to the first embodiment, the binding structure 5 is disposed on the end face 12 of the first structure 2. Thereby, when a molecule 20, as shown in Fig. 6, attaches and binds to the binding structure 5, the relative mobility around the first axis of rotation 6 is limited. The range of possible elevation angles 8 is thus reduced. This change in mobility can then be detected by the detecting means 100.

Preferably, the first structure 2 and the second structure 3 may both be plate-shaped or rod-like.

As also described with respect to the first embodiment, the sensor device 1 of the present embodiment may comprise a rod-like second structure 3. Further, any number of sensing mechanisms 2, 3, 4 and/or their constituent elements and/or detecting means 100 may be provided, as elucidated above. For example, multiple or many first structures 2 may be provided on a single second structure 3.

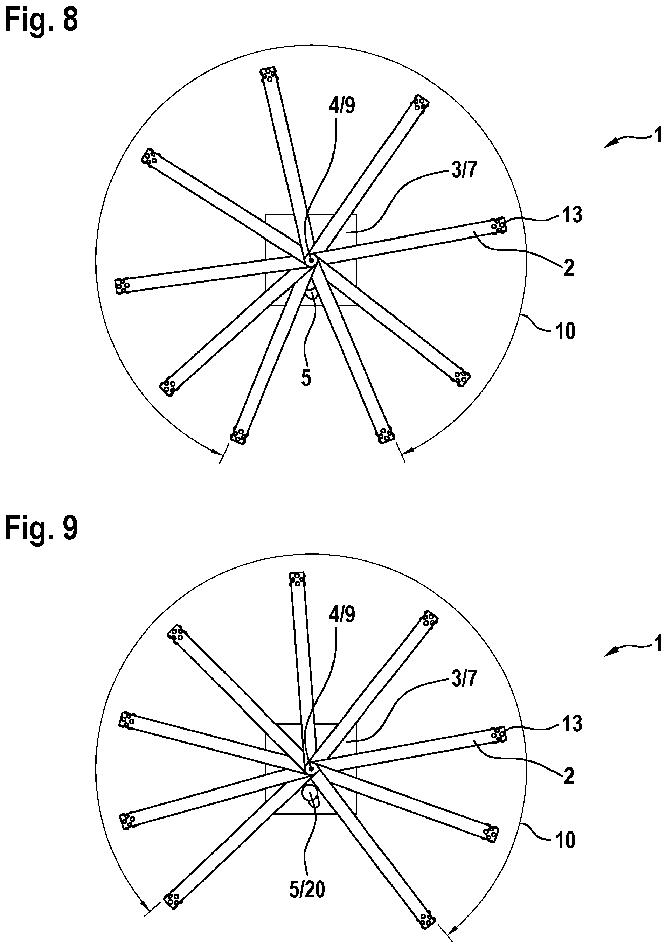

Figs. 7, 8 and 9 each show a schematic drawing of a sensor device 1 according to a third embodiment of the present invention. For ease of explanation, the detecting means 100 is not shown therein. Fig. 7 shows a general structure of the sensor device 1. Fig. 8 shows a state in which no molecule 20 is present or bound with/to the binding structure 5, whereas Fig. 9 shows a state in which a molecule 20 is bound with/to the binding structure 5. Further, Figs. 8 and 9 show a top view of the sensor device 1.

As can be taken from Fig. 7, the sensor device 1 of the present embodiment includes the first structure 2 as a rod-like structure and the second structure 3 as a plate-shaped structure. Further, the joining portion 4 rotatably connects the first structure 2 and the second structure 3. The first structure 2, the second structure 3 and the joining portion 4 of the present embodiment are constructed similar to a hand of a clock (see also Figs. 8 and 9). The second axis of rotation 9 is perpendicular to the surface 7 of the second structure 3. Herein, the relative mobility of the first structure 2 to the second structure 3 (or vice versa) is only around the second axis of rotation 9. The joining portion 4 of the present embodiment does not allow a (substantial, destruction-free) rotation around the first axis of rotation 6.

Furthermore, the binding structure 5 is disposed on the surface 7 of the second structure 3.

In Figs. 8 and 9, a range of mobility of one first structure 2 around the second axis of rotation 9 is shown. Therein, the possible pivot angle 10 of the first structure 2 is limited when the molecule 20 binds with/to the binding structure 5.

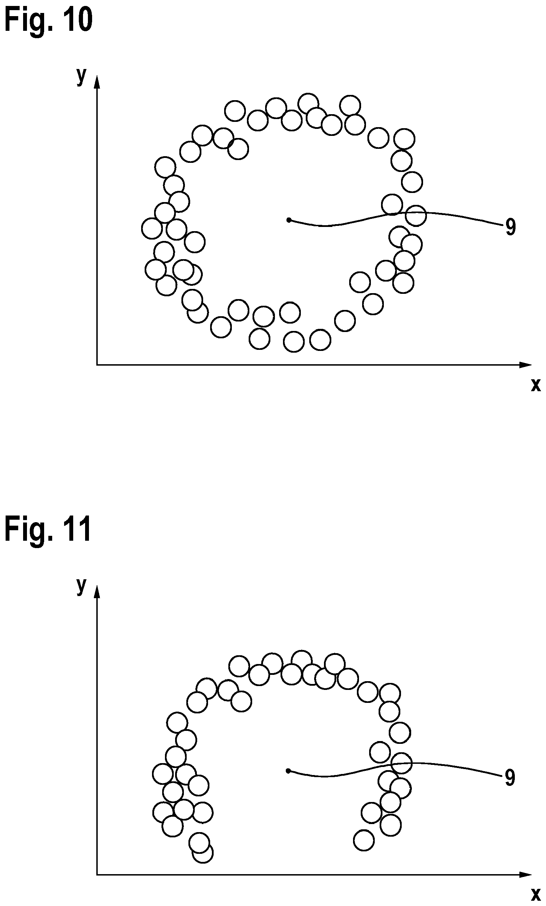

Examples of measurement results detected by the detecting means 100 are shown in Figs. 10 and 11.

Fig. 10 shows an illustrative example of a measurement result obtained by the sensor device 1 shown in Fig. 8, i.e. without molecule 20 being bound, and Fig. 11 shows an illustrative example of a measurement result obtained by the sensor device 1 shown in Fig. 9, i.e. with a molecule 20 being bound.

As can be taken therefrom, the detecting means 100 is configured to detect the change in relative mobility from the fluorescence signal emitted by the markers 13. In Figs. 8 and 10, the first structure 2 can rotate freely around the second axis of rotation 9. In Figs. 9 and 11, the first structure 2 is limited to a predetermined pivot angle 10 by the molecule 20.

Similar to the description of the first and second embodiments, the sensor device 1 of the present embodiment may comprise a rod-like second structure 3. Further, any number of sensing mechanisms 2, 3, 4 and/or their constituent elements and/or detecting means 100 may be provided, as elucidated above. For example, multiple or many first structures 2 may be provided on a single second structure 3.

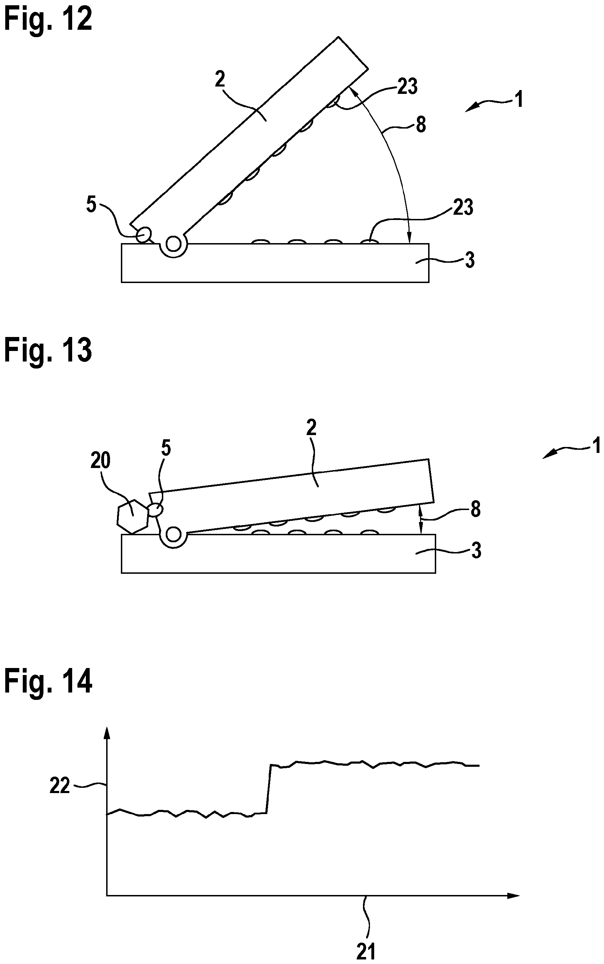

Figs. 12 and 13 each show a schematic drawing of a sensor device 1 according to a fourth embodiment of the present invention. Fig. 14 shows an illustrative example of a measurement result obtained by the sensor device 1 shown in Figs. 12 and 13.

The general configuration of the first structure 2, the second structure 3 and the joining portion 4 of the present embodiment is similar to that of the second embodiment shown in Figs. 5 and 6.

Herein, however, the first structure 2 and the second structure 3 each comprise at least one fluorophore 23. Therein, the fluorophores 23 are configured to transfer energy between one another via FRET (Förster resonance energy transfer). For example, the fluorophore(s) 23 attached to the first structure 2 may be (a) donor(s), and the fluorophore(s) 23 attached to the second structure 3 may be (an) acceptor(s).

Thereby, when a molecule 20 binds with/to the binding structure 5 and thereby limits the relative mobility with respect to the elevation angle 8, a (mean or average) distance between the fluorophores 23 of the first structure 2 and the second structure 3 decreases, thus increasing the amount of energy transferred via FRET.

The detecting means 100 is configured to detect changes in the fluorescence emitted by the fluorophores 23 and thereby detect changes in the relative mobility between the first structure 2 and the second structure 3 (and vice versa).

Fig. 14 shows an illustrative measurement result thereof. Therein, the ordinate 21 is time and the abscissa 22 is the FRET signal detected by the detecting means 100.

As can be taken from Fig. 14, over time, the FRET signal strongly increases. This indicates that a molecule 20 has been bound with/to the binding structure 5, thereby decreasing the mean or average distance between the first structure 2 and the second structure 3 and increasing the energy transfer via FRET.

The foregoing described detection via FRET can be combined with the other foregoing described embodiments.

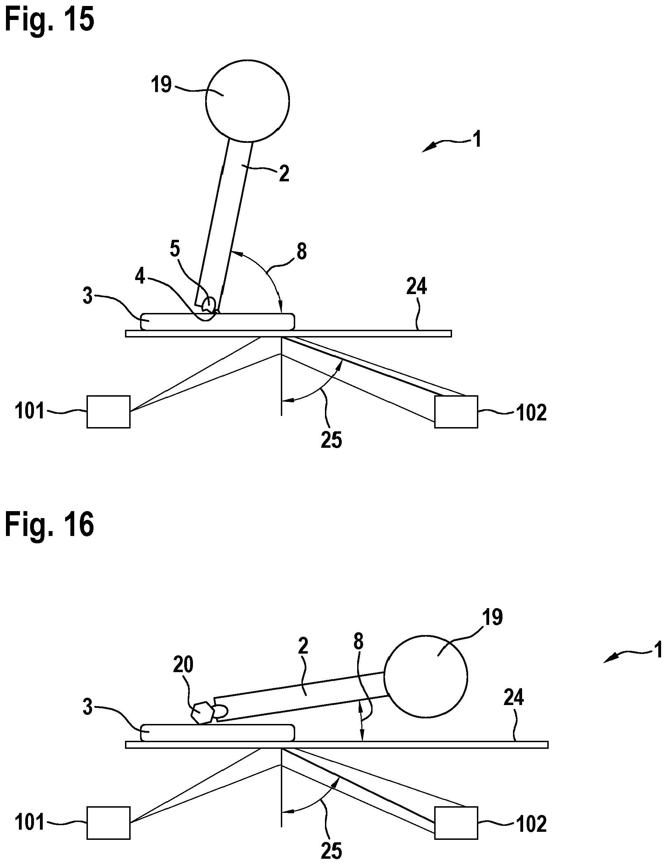

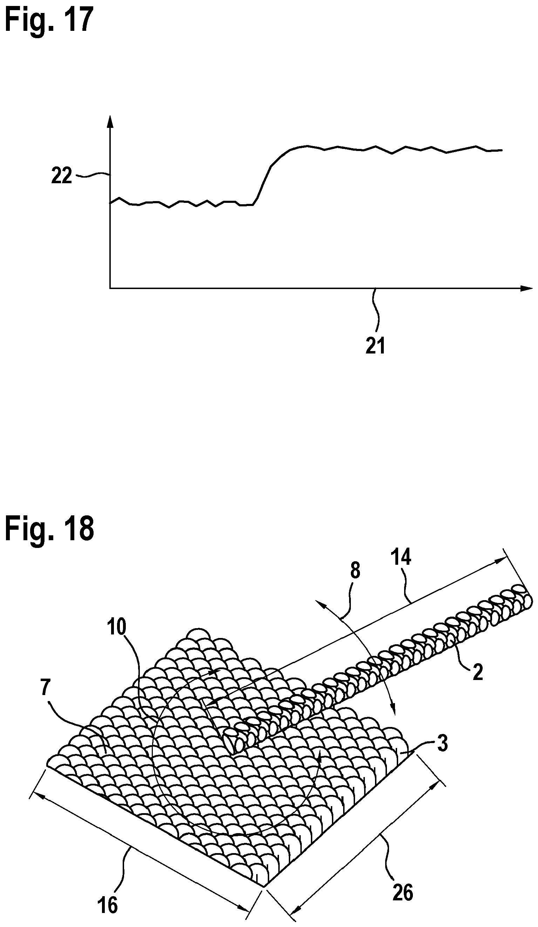

Figs. 15 and 16 each show a schematic drawing of a sensor device 1 according to a fifth embodiment of the present invention. Fig. 17 shows an illustrative example of a measurement result obtained by the sensor device 1 shown in Figs. 15 and 16.

In the present embodiment, the general configuration of the first structure 2, the second structure 3, and the joining portion 4 is similar to that of the first embodiment shown in Figs. 1 and 2.

Herein, however, the detection of relative mobility between the first structure 2 and the second structure 3 is based on surface plasmon resonance (SPR).

In the present embodiment, a nanoparticle 19 is deposited on the distal end 18 of the first structure 2.

Further, the second structure 3 is disposed on a gold surface 24. Alternatively, the second structure 3 may be macrosized and consist of or comprise gold. In other words, the second structure 3 may form the gold surface 24. Therein, one or more first structures 2 may be attached, each via one joining portion 4, to said second structure 3 as the gold surface 24. Alternatively to the second structure 3 forming the gold surface 24, gold may be deposited on the second structure 3, for example via sputtering, especially on a bottom surface (opposite the first structure 2) thereof.

The detecting means 100 comprises a light source 101 and a detector 102. The light source 101 is configured to emit measurement light. The detector 102 is configured to measure light emitted by the light source 101 and reflected by the gold surface 24. Further, the detector 102 is configured to detect a surface plasmon resonance angle 25 of absorbed light due to surface plasmon resonance in the gold surface 24.

Herein, the binding of the molecule 20 with/to the binding structure 5 limits the (mean or average) distance between the first structure 2 and the second structure 3, and thereby limits the distance between the nanoparticle 19 and the gold surface 24. This changes the surface plasmon resonance angle 25 and is detectable by the detector 102 of the detecting means 100.

Fig. 17 shows an illustrative example of such a measurement result. Therein, the abscissa 21 is time and the ordinate 22 is a measurement signal readout by the detecting means 100. The measurement signal is anti-proportional to the mean or average distance between the nanoparticle 19 and the gold surface 24 (i.e. the surface plasmon resonance angle 25). As can be taken from Fig. 17, the signal changes over time, thereby indicating a presence of molecule(s) 20.

The foregoing described means of detection of the present embodiment may be combined with the other foregoing described configurations of the sensor device 1 and/or the other foregoing described means of detection (for example, simultaneous detection of FRET and SPR).

Fig. 18 shows a schematic drawing of a sensor device 1 according to a sixth embodiment of the present invention.

Herein, the general configuration of the sensor device 1 is similar to the configuration of the sensor device 1 of the first embodiment shown in Figs. 1 and 2. Herein, Fig. 18 shows an example of the sensor device 1 being formed of DNA origami structures.

Therein, the second structure 3 is preferably a plate made of DNA structures comprising a length 16 and a width 26 of roughly 55 nm, respectively. Further, the length 14 of such a first structure 2 comprising DNA is roughly 400 nm. In one example, the length 14 is 436 nm.

Although a detailed structure of the surface 7 of the second structure 3 due to the DNA structure is shown, this is further defined as a flat plate-shape. In other words, in relation to a height of the second structure 3, said second structure 3 does not comprise substantial projections or recesses therein.

Further, although not shown, the first structure 2, the second structure 3 and the joining portion 4 may be formed integrally with one another. For example, the joining portion 4 may comprise a single strand of DNA or RNA connected to or being a part of (one rung thereof) the first structure 2 and the second structure 3.

Any of the foregoing described embodiments may be formed of such DNA origami structures shown in Fig. 18.

In addition to the foregoing written explanations, it is explicitly referred to figures 1 to 18, which in detail show configuration examples of the invention.

### Reference signs

- 1: sensor device
- 2: first structure
- 3: second structure
- 4: joining portion
- 5: binding structure
- 6: first axis of rotation
- 7: surface
- 8: elevation angle
- 9: second axis of rotation
- 10: pivot angle
- 12: end face
- 13: marker
- 14: length of first structure
- 15: width of first structure
- 16: length of second structure
- 17: height of second structure
- 18: distal end of first structure
- 19: nanoparticle
- 20: molecule
- 21: abscissa
- 22: ordinate
- 23: fluorophore
- 24: gold surface
- 25: surface plasmon resonance angle
- 26: width of second structure
- 100: detecting means
- 101: light source
- 102: detector

## Claims

1. Sensor device (1) for detecting the presence of one or more molecules (20) and/or of a class of molecules (20); comprising:
at least one first (nano-)structure (2);
at least one second structure (3);
at least one joining portion (4) respectively connecting the at least one first (nano-) structure (2) and the at least one second structure (3) and configured to allow a relative mobility between the at least one first (nano-)structure (2) and the at least one second structure (3), wherein the at least one joining portion (4) is an element separate from and connected to the at least one first (nano-)structure (2) and the at least one second structure (3) or wherein the at least one joining portion (4) is formed integrally with the at least one first (nano-)structure (2) and/or with the at least one second structure (3);
one binding structure (5), especially one binding structure (5) per joining portion (4), configured to bind with a molecule, the presence of which is to be detected, wherein
the binding structure (5) is located on the at least one first (nano-)structure (2) or on the at least one second structure (3) or on the at least one joining portion (4) such that said allowed relative mobility between the at least one first (nano-)structure (2) and the at least one second structure (3) is changed, especially limited, in a bound state of the binding structure (5) as compared to an unbound state of the binding structure (5); and
a detecting means (100) for detecting said relative mobility between the at least one first (nano-)structure (2) and the at least one second structure (3).

2. Sensor device (1) according to claim 1, wherein the at least one first (nano-) structure (2) is a rod-like structure and/or the at least one second structure (3) is a plate-shaped structure.

3. Sensor device (1) according to claim 1 or claim 2, wherein the at least one joining portion (4) is configured to allow a relative rotation as said relative mobility of the at least one first (nano-)structure (2) relative to the at least one second structure (3).

4. Sensor device (1) according to claim 3, wherein a first axis of rotation (6) is parallel to a plane defined by an extension of a surface (7) of the at least one second structure (3) with which the at least one joining portion (4) is formed integrally or to which the at least one joining portion (4) is connected, and wherein the binding structure (5) is configured to - in the bound state - limit said allowed relative rotation around the first axis of rotation (6) to a predefined elevation angle (8).

5. Sensor device (1) according to claim 3 or claim 4, wherein a second axis of rotation (9) is perpendicular to a plane defined by an extension of a surface (7) of the at least one second structure (3) with which the at least one joining portion (4) is formed integrally or to which the at least one joining portion (4) is connected, and wherein the binding structure (5) is configured to - in the bound state - limit said allowed relative rotation around the second axis of rotation (9) to a predefined pivot angle (10).

6. Sensor device (1) according to any one of the foregoing claims, wherein the at least one joining portion (4) is a hinge joint.

7. Sensor device (1) according to any one of the foregoing claims, wherein the binding structure (5) is located on an end section, especially on an end face (12), of the at least one first (nano-)structure (2) adjacent to the at least one joining portion (4) or is located on a surface (7) of the at least one second structure (3), especially adjacent to the at least one joining portion (4).

8. Sensor device (1) according to any one of the foregoing claims, wherein at least two of the at least one first (nano-)structure (2), the at least one second structure (3), and the at least one joining portion (4) are formed integrally with one another, especially as a continuous (nano-)structure.

9. Sensor device (1) according to any one of the foregoing claims, wherein the binding structure (5) is configured to bind with a predetermined organic molecule, especially with a predetermined bio-molecule.

10. Sensor device (1) according to any one of the foregoing claims, wherein at least one of the at least one first (nano-)structure (2), the at least one second structure (3), and the at least one joining portion (4) comprises or consists of a nucleic acid structure and/or a protein.

11. Sensor device (1) according to claim 10, wherein at least two of the at least one first (nano-)structure (2), the at least one second structure (3), and the at least one joining portion (4) comprise or consist of DNA or RNA, and wherein preferably the number of strands varies between two thereof.

12. Sensor device (1) according to any one of the foregoing claims, wherein the at least one first (nano-)structure (2) and/or the at least one second structure (3) comprise(s) a marker (13), especially a fluorescence marker, and wherein the detecting means (100) is configured to detect a movement of said marker (13).

13. Sensor device (1) according to any one of the foregoing claims, wherein the at least one first (nano-)structure (2) and the at least one second structure (3) each comprise at least one fluorophore, and wherein the detecting means (100) is configured to detect a Förster Resonance Energy Transfer between said fluorophores comprised by the at least one first (nano-)structure (2) and the at least one second structure (3).

14. Sensor device (1) according to any one of the foregoing claims, wherein the detecting means (100) is configured to detect a surface (7) plasmon resonance between the at least one first (nano-)structure (2) and the at least one second structure (3).

15. Sensor device (1) according to claim 14, wherein at least one of the at least one first (nano-)structure (2) and the at least one second structure (3) comprise(s) a nanoparticle, preferably a gold nanoparticle.
